# FASCICULE DE BREVET EUROPEEN

(11) **EP 3 449 197 B1**
(45) Date de publication et mention de la délivrance du brevet: **11.12.2019**
(21) Numéro de dépôt: 17725660.9
(22) Date de dépôt: 21.04.2017
(51) Int. Cl.: F28F 3/04, F28F 21/06, F28D 9/00

(54) **ECHANGEUR THERMIQUE EN MATIÈRE PLASTIQUE ET VÉHICULE COMPRENANT CET ÉCHANGEUR THERMIQUE**
AUS KUNSTSTOFFMATERIAL HERGESTELLTER WÄRMETAUSCHER UND FAHRZEUG BESAGTEM WÄRMETAUSCHER
HEAT EXCHANGER MADE FROM PLASTIC MATERIAL AND VEHICLE COMPRISING SAID HEAT EXCHANGER

(30) Priorité: 25.04.2016 FR 1653647
(43) Date de publication de la demande: 06.03.2019
(73) Titulaire: NOVARES FRANCE, 92140 Clamart (FR)
(72) Inventeur: ROSSIGNOL, Vincent, 69003 LYON (FR); WAYMEL, Gilles, 62410 HULLUCH (FR); DEMANGEOT, Jérôme, 62350 CALONNE SUR LA LYS (FR)
(74) Mandataire: Delorme, Nicolas
(86) Numéro de dépôt international: PCT/FR2017/050945
(87) Numéro de publication internationale: WO 2017/187057

(56) Documents cités:
- FR-A- 1 529 833
- FR-A1- 2 993 354
- US-A1- 2014 345 838

## Description

La présente invention concerne un échangeur thermique, et un véhicule comprenant cet échangeur thermique, selon la revendication 1, et respectivement 10.

Les échangeurs thermiques à plaques comprennent traditionnellement plusieurs plaques en aluminium empilées de manière à former entre les plaques adjacentes un espace intermédiaire destiné à la circulation d'un fluide. Classiquement, les échangeurs thermiques comprennent un premier groupe d'espaces intermédiaires connectés fluidiquement les uns aux autres pour la circulation d'un premier fluide à travers la pile de plaques, et un deuxième groupe d'espaces intermédiaires connectés fluidiquement les uns aux autres pour la circulation d'un deuxième fluide à travers la pile de plaques. Les espaces intermédiaires du premier groupe alternent classiquement avec les espaces intermédiaires du deuxième groupe, de manière à permettre un échange thermique entre le premier fluide et le deuxième fluide, selon la direction d'empilement.

Cependant, un inconvénient de ces échangeurs thermiques est un encombrement relativement important, notamment du fait de l'alternance d'espaces intermédiaires consacrés à un premier fluide et d'espaces consacrés à un deuxième fluide.

De plus, le rendement est relativement limité. L'échange thermique est en effet réalisé selon une direction orthogonale aux plaques uniquement, c'est-à-dire d'un espace intermédiaire à l'autre de l'échangeur thermique.

Par ailleurs, les échangeurs thermiques en aluminium sont relativement encombrants. Leur forme parallélépipédique est une contrainte à l'intégration de ces échangeurs dans un environnement complexe, et ne permet pas un rendement de transfert thermique optimal d'une pièce ou d'un sous-ensemble du fait de Le document FR 1 529 833 A décrit un échangeur thermique selon le préambule de la revendication 1.

Aussi, la présente invention vise à pallier tout ou partie de ces inconvénients en proposant un échangeur thermique offrant une compacité améliorée à rendement équivalent, ou un rendement amélioré à compacité équivalente. Ces problèmes sont résolus par les caractéristiques de la partie caractérisante.

A cet effet, la présente invention a pour objet un échangeur thermique, selon l'objet de la revendication 1.

Ainsi, l'échangeur thermique permet une circulation de plusieurs fluides au sein d'un même espace intermédiaire, si bien que l'échangeur thermique présente une compacité améliorée et un rendement plus efficace. De plus, l'échangeur thermique est en matière plastique et offre en conséquence la possibilité d'avoir une forme adaptée au volume dans lequel l'échangeur est destiné à être positionné, si bien que le rendement peut être amélioré sans augmentation d'encombrement. Ainsi, un échangeur en matière plastique offre une liberté de forme qui permet de s'affranchir des contraintes habituellement liées à la forme parallélépipédique des échangeurs en aluminium.

Selon l'invention, chaque espace intermédiaire multi-fluides comprend une paroi interne s'étendant à travers celui-ci de manière à séparer de façon étanche au moins deux compartiments adjacents de cet espace intermédiaire multi-fluides, et la paroi interne est configurée pour permettre un échange thermique entre les fluides circulant dans ces au moins deux compartiments adjacents.

Un avantage de cette caractéristique est une amélioration du rendement, car l'échange thermique est multi-directionnel et intervient aussi bien entre deux espaces intermédiaires qu'entre deux compartiments d'un même espace intermédiaire multi-fluide.

Selon un mode de réalisation préféré, la paroi interne s'étend au moins en partie selon une trajectoire sinueuse.

Cette trajectoire peut être angulaire, notamment en zigzag ou créneaux, ou courbe, par exemple en forme de S ou sinusoïde.

Ainsi, cette caractéristique permet de maximiser la surface d'échange thermique transverse, c'est-à-dire entre les fluides circulant dans les deux compartiments d'un même espace intermédiaire multi-fluides. Cela améliore donc le rendement.

Selon un mode de réalisation préféré, la paroi interne est venue de moulage avec au moins l'une des deux plaques adjacentes entre lesquelles cette paroi interne s'étend.

Cela permet de réduire les coûts.

Selon un mode de réalisation préféré, la paroi interne est liée à au moins l'une des deux plaques adjacentes par des moyens de liaison étanches et thermiquement conducteurs.

Cette caractéristique améliore le rendement.

Selon un mode de réalisation préféré, la paroi interne a une épaisseur inférieure à celle des plaques entre lesquelles cette paroi interne s'étend.

Cela favorise l'échange thermique intra-espace intermédiaire, et contribue donc à un meilleur rendement.

Selon un mode de réalisation préféré, les parois internes de deux espaces intermédiaires multi-fluides consécutifs s'étendent en décalage l'une de l'autre.

En d'autres termes, d'un espace intermédiaire multi-fluides à un autre, les compartiments destinés à la circulation d'un même fluide ne se superposent pas, ou partiellement. Par exemple, les compartiments de deux espaces intermédiaires multi-fluides consécutifs ont des formes différentes ou sont décalés, au moins partiellement, dans le plan des plaques, si bien qu'un échange thermique a lieu à la fois horizontalement entre les fluides circulant dans des compartiments adjacents d'un même espace intermédiaire multi-fluides et verticalement à travers les plaques, entre les fluides circulant dans des espaces intermédiaires adjacents.

Ainsi, il existe une ou des zones de chevauchement entre les compartiments de deux espaces intermédiaires multi-fluides consécutifs. Ce chevauchement contribue à créer davantage d'interface thermique, donc à améliorer la compacité et l'encombrement.

Cette possibilité de forme variée des compartiments est permise notamment par l'utilisation de matière plastique.

Selon un mode de réalisation préféré, plusieurs plaques de la pile de plaques ont une épaisseur et/ou une densité différente.

Cette caractéristique permet avantageusement de créer un gradient thermique prédéterminé au sein de la pile de plaques, en favorisant le transfert thermique parmi un ou plusieurs groupes de plaques, c'est-à-dire à un ou des emplacements prédéterminés de la pile de plaques.

Selon un mode de réalisation préféré, les compartiments de chaque espace intermédiaire multi-fluides sont au moins en partie délimités par des faces en regard des deux plaques adjacentes délimitant cet espace intermédiaire multi-fluides.

Ainsi, chaque compartiment d'un espace intermédiaire multi-fluides offre une interface d'échange thermique permettant un échange de chaleur vertical, c'est-à-dire inter-espace intermédiaire, de chaque côté de cet espace intermédiaire multi-fluide en direction des deux espaces intermédiaires qui lui sont adjacents, et un échange de chaleur horizontal ou transversal, c'est-à-dire intra-espace intermédiaire, avec un ou plusieurs autres compartiments de cet espace intermédiaire multi-fluides.

Selon un mode de réalisation préféré, au moins un des compartiments comprend une pluralité d'éléments destinés à entraver l'écoulement de fluide dans ce compartiment, et les éléments sont thermiquement conducteurs.

Ainsi, ces éléments améliorent le rendement d'une part en formant obstacle à la circulation de fluide et donc en provoquant un écoulement turbulent favorisant l'échange thermique, et d'autre part en augmentant l'interface thermique entre le fluide et le compartiment.

Selon un autre aspect, l'invention a aussi pour objet un véhicule comprenant un échangeur thermique ayant les caractéristiques précitées.

Ce véhicule offre une possibilité d'échange thermique avec un rendement amélioré, une plus grande place disponible du fait de la compacité de l'échangeur thermique, et de la liberté de forme offerte par la matière plastique.

L'échangeur thermique permet d'utiliser plusieurs fluides pour refroidir ou réchauffer un ou plusieurs autres fluides, ce qui est avantageux en termes de rendement, car selon le régime de fonctionnement d'un véhicule, certains fluides se prêtent davantage au refroidissement ou réchauffement d'un ou plusieurs autres fluides.

D'autres caractéristiques et avantages de la présente invention ressortiront clairement de la description détaillée ci-après d'un mode de réalisation, donné à titre d'exemple non limitatif, en référence aux dessins annexés dans lesquels :
- La figure 1 est une vue en perspective d'un échangeur thermique selon un mode de réalisation de l'invention,
- La figure 2 est une vue en perspective et en coupe partielle de l'échangeur thermique de la figure 1,
- La figure 3 est une vue éclatée et en perspective de l'échangeur thermique de la figure 1,
- La figure 4 est une vue de dessus de deux plaques consécutives de la pile de plaques d'un échangeur selon un mode de réalisation de l'invention,
- La figure 5 est une vue en coupe selon la ligne I-I de la figure 4,
- La figure 6 est une vue en perspective d'un échangeur thermique selon un mode de réalisation de l'invention,
- La figure 7 est une vue en perspective et en coupe partielle de l'échangeur thermique de la figure 4,
- La figure 8 est une vue éclatée et en perspective de l'échangeur thermique de la figure 4,
- La figure 9 est une vue en coupe et de côté de l'échangeur thermique de la figure 4.

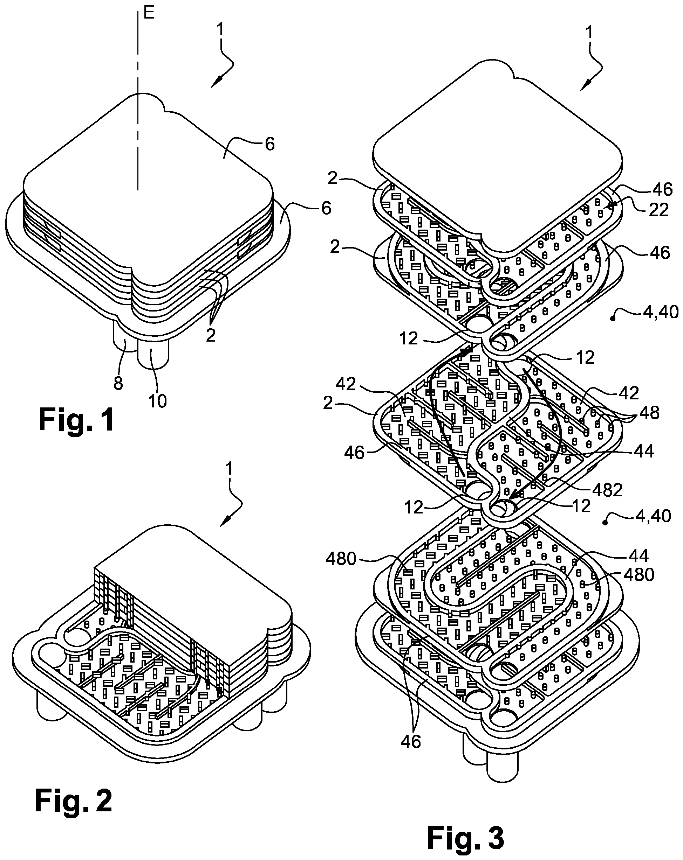

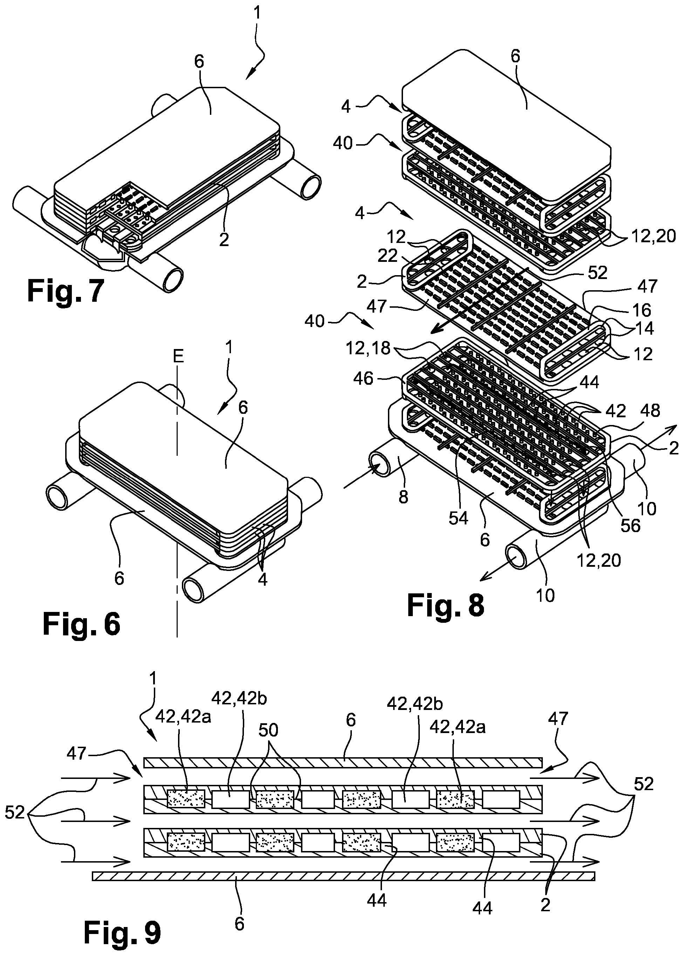

Les figures 1 et 6 montrent un échangeur 1 thermique selon des modes de réalisation de l'invention.

L'échangeur 1 thermique est du type échangeur thermique à plaques. L'échangeur 1 thermique comprend une pluralité de plaques 2 empilées selon une direction E d'empilement. Les plaques 2 adjacentes sont distantes l'une de l'autre, de manière à définir entre chaque paire de plaques 2 adjacents un espace 4 intermédaire destiné à une circulation de fluide au sein de l'échangeur 1 thermique.

Les plaques 2 sont configurées pour permettre un échange thermique à travers celles-ci, c'est-à-dire d'un espace 4 intermédiaire à un espace 4 intermédiaire adjacent.

Les espaces 4 intermédiaires peuvent être fermés, comme illustré sur les figures 3 et 8, ou ouverts, comme illustré sur la figure 8. Les espaces 4 intermédiaires fermés ont une paroi 46 externe à contour fermé, qui s'étend ici au bord des plaques 2, entre deux plaques 2 adjacentes, de manière à délimiter un volume fermé. Les espaces 4 intermédiaires ouverts présentent au moins deux ouvertures 47 latérales, délimitées par exemple par les bords en regard de deux plaques 2 adjacentes, et par exemple situées à des côtés opposés de ces plaques 2 afin de permettre une circulation de fluide depuis l'extérieur de l'échangeur 1 thermique et traversant la pile de plaques 2.

La direction E d'empilement est ici sensiblement orthogonale aux plaques 2. Par ailleurs, les plaques 2 peuvent être planes comme illustré sur les figures. Les plaques 2 peuvent être de même forme et de mêmes dimensions, si bien qu'une fois empilées, les bords extérieurs des plaques 2 coïncident.

L'échangeur 1 thermique peut comprendre deux plaques 6 d'extrémités, la pile de plaques 2 étant interposée entre ces deux plaques 6 d'extrémité.

L'échangeur 1 thermique comprend ici des entrées 8 destinées chacune à l'introduction d'un fluide à l'intérieur de l'échangeur 1 thermique, et des sorties 10 pour l'évacuation de ces fluides à l'extérieur de l'échangeur 1 thermique. Les entrées 8 et/ou les sorties 10 peuvent être ménagées à travers l'une des ou les plaques 6 d'extrémité.

L'échangeur 1 thermique comprend notamment une pluralité d'ouvertures 12 configurées pour permettre une circulation fluidique d'un espace 4 intermédiaire à un autre. Les ouvertures 12 peuvent être ménagées à travers les plaques 2.

L'échangeur 1 thermique peut comprendre des canaux 14 de distribution s'étendant à travers la pile de plaques 2, de manière à connecter plusieurs ouvertures 6 entre elles. Chaque canal 8 de distribution est ainsi destiné à conduire un fluide depuis une des entrées 8 jusqu'à des espaces 4 intermédiaires prédéterminés, via des ouvertures 12, ou depuis ces espaces 4 intermédiaires prédéterminés jusqu'à une des sorties 10, via des ouvertures 12. Les canaux 14 de distribution s'étendent par exemple selon la direction E d'empilement. Les canaux 14 de distribution peuvent être formés par une paroi 16 périphérique s'étendant entre deux plaques 2 adjacentes, autour d'une des ouvertures 12 ou d'un groupe d'ouvertures 12.

L'échangeur 1 thermique est réalisé en matière plastique, notamment en matière plastique contenant une charge thermiquement conductrice, comme par exemple du polyamide 66 (PA66) incluant une charge de graphite et/ou de carbone, pour procurer une conductivité thermique à 20°C supérieure à 0, 6 W.m⁻¹.K⁻¹, de préférence égale ou supérieure à 1 W.m⁻¹.K⁻¹.

On notera que les plaques 2 peuvent avoir une épaisseur ou une densité différente les unes des autres, par exemple croissante ou décroissante dans la direction E d'empilement, de manière à créer un gradient prédéterminé d'échange thermique au sein de la pile de plaques 2.

Parmi l'ensemble des espaces 4 intermédiaires, la pile de plaques 2 présente un réseau d'espaces 40 intermédiaires multi-fluides, c'est-à-dire une pluralité d'espaces 40 intermédiaires multi-fluides connectés entre eux de manière fluidique, notamment via des ouvertures 12 et le cas échéant des canaux 14 de distribution.

Chaque espace 40 intermédiaire multi-fluide est configuré pour permettre la circulation de plusieurs flux de fluide entre les plaques 2 adjacentes qui le délimite.

On notera que les fluides circulant à travers chaque espace 40 intermédiaire peuvent être identiques ou différents. Dans tous les cas, ces fluides circulent de manière séparée à travers les espaces 40 intermédiaires multi-fluides.

En effet, chaque espace 40 intermédiaire multi-fluides comprend plusieurs compartiments 42, séparés de manière étanche les uns des autres, si bien qu'il n'y a pas de communication fluidique entre les compartiments 42 d'un même espace 40 intermédiaire multi-fluides.

Ainsi, chaque compartiment 42 est consacré à la circulation d'un unique fluide parmi la pluralité de fluides destinés à circuler à travers le réseau d'espaces 40 intermédiaires multi-fluides.

Selon l'exemple de la figure 3, les espaces 40 intermédiaires comprennent chacun deux compartiments 42. Selon l'exemple de la figure 8, les espaces 40 intermédiaires multi-fluides comprennent chacun huit compartiments 42.

Chaque compartiment 42 est relié fluidiquement avec au moins un des compartiments 42 d'un des autres espaces 40 intermédiaires multi-fluides.

L'échangeur 1 thermique comprend à cet effet, pour chaque compartiment 42, une ouverture 18 d'entrée et une ouverture 20 de sortie débouchant chacune dans ce compartiment 42 afin de permettre respectivement l'entrée et la sortie d'un fluide pour ce compartiment 42.

Les ouvertures 18, 20 d'entrée et de sortie peuvent être ménagées à travers les canaux 14 de distribution, notamment à travers la paroi 20 périphérique de canaux 14 de distribution distincts, ou bien le cas échéant, à travers les plaques 2 en étant confondues des ouvertures 12. Selon l'exemple des figures, les ouvertures 18 d'entrée sont des ouvertures 12 connectées fluidiquement à une entrée 8, et les ouvertures 20 de sortie sont des ouvertures 12 connectées fluidiquement à une sortie 10.

Comme illustré sur les figures, les ouvertures 12, et plus précisément les ouvertures 18 d'entrée, respectivement les ouvertures 20 de sortie, sont coaxiales.

Les ouvertures 18, 20 d'entrée et de sortie d'un même compartiment 14 sont distinctes, positionnées à distance l'une de l'autre, et décalées selon une direction parallèle aux plaques 2, c'est-à-dire non coaxiales.

On notera que les compartiments 14 sont configurés pour permettre un écoulement des fluides en parallèle les uns des autres, c'est-à-dire sensiblement dans un même plan d'écoulement parallèle aux plaques 2, depuis l'ouverture 18 d'entrée jusqu'à l'ouverture 20 de sortie correspondantes.

Chaque espace 40 intermédiaire multi-fluides comprend une ou plusieurs parois 44 internes s'étendant à travers celui-ci de manière à séparer de façon étanche deux compartiments 42 adjacents. La ou les parois 44 internes peuvent être formées par une nervure longitudinale reliant les faces 22 en regard des deux plaques 2 adjacentes, distinctes le cas échéant de la ou des parois 16 périphériques. Par ailleurs, les extrémités de cette nervure longitudinale peuvent chacune être reliée à la paroi 46 externe.

Ainsi, les compartiments 42 peuvent former un volume fermé délimité par une ou des parois 44 internes, une portion des faces 22 en regard des deux plaques 2 adjacentes, et une portion de la paroi 46 externe.

On notera que la ou les parois 44 internes d'un espace 40 intermédiaire multi-fluides sont avantageusement configurées pour permettre un échange thermique entre les fluides circulant dans deux compartiments 42 adjacents.

Ainsi, il est important de noter que l'échangeur 1 thermique offre à la fois un échange thermique inter-plaques 2, dans la direction E d'empilement, c'est-à-dire d'un espace 4 intermédiaire à un espace 4 intermédiaire adjacent, qu'un échange thermique intra-plaques, dans un plan parallèle aux plaques 2, c'est-à-dire au sein d'un même espace 4 intermédiaire quand celui-ci est un espace 40 intermédiaire multi-fluides. Ces flux multiples d'échange thermique améliorent le rendement et la compacité de l'échangeur 1 thermique.

Les nervures formant les parois 44 internes ont de préférence une épaisseur inférieure à celle des plaques 2 entre lesquelles elles s'étendent, et le cas échéant inférieure à l'épaisseur de la nervure formant la paroi 46 externe, afin de faciliter cet échange thermique.

Avantageusement, chaque compartiment 42 comprend une pluralité d'éléments 48 formant obstacle à l'écoulement de fluide. Ces éléments 48 sont préférentiellement en matériau thermiquement conducteur afin d'augmenter sensiblement l'interface d'échange thermique et améliorer le rendement. Les éléments 48 s'étendent entre les faces 22 en regard des plaques 2 adjacentes, à partir de l'une de ces faces 22, sans être nécessairement liés à l'autre de ces faces 22.

Les éléments 48 peuvent comprendre des picots 480 destinés à favoriser un écoulement turbulent du fluide afin d'augmenter le rendement du transfert thermique.

Les éléments 48 peuvent comprendre des nervures 482, notamment agencées les unes par rapport aux autres pour former des chicanes augmentant la longueur du trajet de fluide dans le compartiment 42, entre l'ouverture 18 d'entrée et l'ouverture 20 de sortie. Pour maximiser le trajet du fluide, l'ouverture 18 d'entrée et l'ouverture 20 de sortie sont positionnées aux extrémités opposées d'un circuit de circulation de fluide délimité à l'intérieur du compartiment 14. Les nervures 482 peuvent présenter une extrémité solidaire de la ou l'une des parois 44 internes ou de la paroi 46 externe et une extrémité opposée libre.

En particulier, la ou les parois 44 internes, et le cas échéant les éléments 48, peuvent être avantageusement dans le même matériau que les plaques 2, notamment en polyamide 66 (PA66) incluant une charge thermiquement conductrice comme du graphite ou du carbone.

De préférence, la ou les parois 44 internes sont venues de moulage avec les plaques 2 dont elles sont solidaires, de même que le cas échéant les éléments 48 et/ou la paroi 46 externe.

On notera que chaque paroi 44 interne solidaire de l'une des deux plaques 2 adjacentes est préférentiellement liée à l'autre des deux plaques 2 adjacentes, en particulier à la face 22 (figure 3) ou à la ou l'une des parois 44 internes de cette plaque 2 (figure 9), par des moyens de liaison permettant une liaison étanche et thermiquement conductrice. Par exemple, les moyens de liaison peuvent être un cordon 50 de soudure ; ainsi, les parois 44 internes sont de préférence soudées à au moins l'une des deux plaques 2 adjacentes. En effet, le soudage assure une continuité de matière et donc une absence de rupture thermique à l'interface entre les parois 44 internes et la ou les plaques 2 correspondantes.

La ou les parois 44 internes peuvent s'étendre de façon rectiligne, comme illustré sur la figure 8. Toutefois, la ou les parois 44 internes s'étendent de préférence de manière non exclusivement rectiligne. Ainsi, la ou les parois 44 internes peuvent s'étendre notamment de manière curviligne, par exemple ondulée, en forme de S ou sinusoïdale, comme visible sur la figure 3. Cela permet d'agmenter la surface d'échange thermique entre deux compartiments 42 adjacents. Lorsque l'espace 40 intermédiaire multi-fluides comprend plusieurs parois 44 internes, celles-ci peuvent être parallèles entre elles.

De manière avantageuse, comme illustré sur les figures 3, 4 et 5 la ou les parois 44 internes de deux espaces 40 intermédiaires multi-fluides consécutifs dans la direction E d'empilement sont transversalement décalées l'une par rapport à l'autre, c'est-à-dire dans le plan des plaques 2. En particulier, ces parois 44 internes peuvent s'étendre selon des trajectoires différentes. En d'autres termes, la ou les parois 44 internes de ces deux espaces 40 intermédiaires multi-fluides consécutifs ne se superposent pas, ce qui permet de créer des zones de chevauchement propices à un échange thermique dans la direction E d'empilement, i.e. inter-espaces 4, 40 intermédiaires.

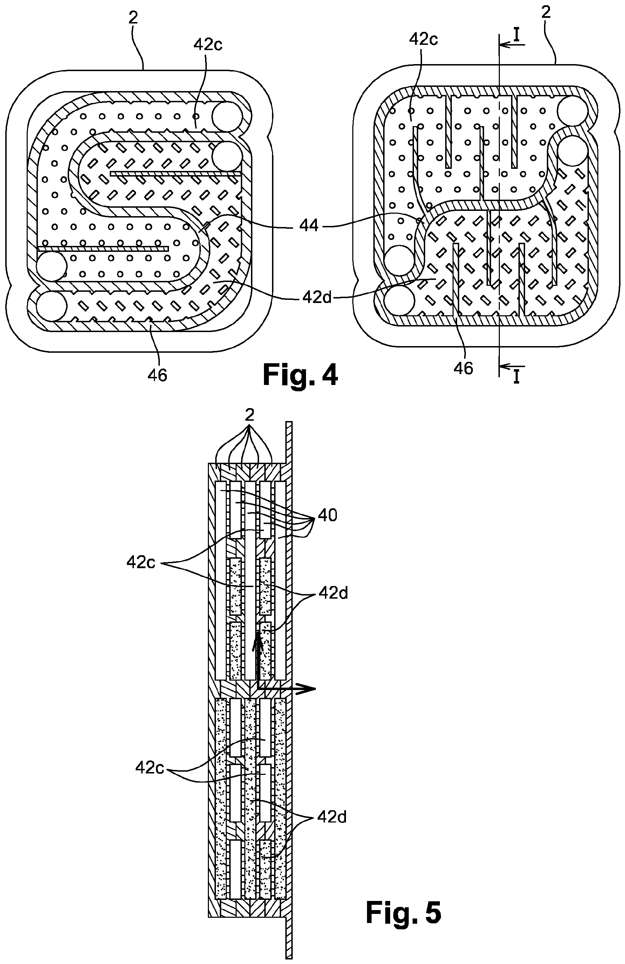

Ainsi, comme visible sur les figures 4 et 5, les compartiments 42c, 42d chacun destiné à la circulation d'un fluide distinct, peuvent avoir une forme différente dans deux espaces 40 intermédiaires multi-fluides consécutifs. D'un espace 40 intermédiaire multi-fluides à l'autre, les compartiments 42c et 42d se chevauchent partiellement. Cela permet un transfert thermique inter-espaces 40 intermédiaires multifluides, à travers les plaques 2, en plus du transfert thermique ayant lieu à l'intérieur d'un même espace 40 intermédiaire multi-fluides via la paroi 44 interne.

Comme indiqué précédemment, les espaces 4 intermédiaires peuvent être ouverts ou fermés. L'échangeur 1 thermique peut comprendre dans la direction E d'empilement une alternance d'espaces 4 intermédiaires ouverts et d'espaces 40 intermédiaires multi-fluides fermés connectés entre eux, comme illustré sur les figures 7 à 9. Selon l'exemple des figures 7 à 9, de l'air ou de l'huile peut en effet traverser la pile de plaques 2 en passant par les espaces 4 intermédiaires ouverts (flèche 52). Par exemple, l'échangeur 1 thermique peut être positionné à l'intérieur d'un carter d'huile (non représenté).

Par ailleurs, l'ensemble d'espaces 4 intermédiaires peut comprendre un réseau d'espaces 4 intermédiaires mono-fluide connectés entre eux, chaque espace 4 intermédiaire mono-fluide étant destiné à la circulation d'un unique fluide entre les deux plaques 2 adjacents qui le délimitent. En d'autres termes, les espaces 4 intermédiaires mono-fluide sont exempts de paroi 44 interne les divisant en compartiments 42 séparés de manière étanche les uns des autres. Le cas échéant, l'échangeur 1 thermique peut présenter, dans la direction E d'empilement, une alternance d'espaces 4 intermédiaires mono-fluide et d'espaces 40 intermédiaires multi-fluides, comme illustré sur les figures 7 à 9 qui représentent un cas particulier où les espaces 4 intermédiaires mono-fluide sont ouverts.

On notera que l'ensemble des espaces 4 intermédiaires de l'échangeur 1 thermique peut comprendre uniquement des espaces 40 intermédiaires multi-fluides, comme représenté sur les figures 1 à 3.

Les espaces 40 intermédiaires peuvent être tous connectés fluidiquement entre eux, comme visible sur la figure 3, si bien qu'à chaque strate de l'échangeur 1 thermique, i.e. à chaque espace 40 intermédiaire multi-fluides, ce sont les mêmes fluides qui circulent. Selon l'exemple des figures 1 à 3, deux fluides circulent à travers l'échangeur 1 thermique, chaque fluide circulant dans un des deux compartiments 42 de chacun des espaces 40 intermédiaires multi-fluides, ces compartiments 42 étant en communication fluidique.

Alternativement, bien que non représenté, l'ensemble des espaces 4 intermédiaires peut comprendre un premier groupe d'espaces 40 intermédiaires multi-fluides en communication fluidique, et un deuxième groupe d'espaces 40 intermédiaires multi-fluides en communication fluidique. Ainsi, le premier groupe d'espaces 40 intermédiaires multi-fluides permet la circulation d'un premier groupe de fluides dans l'échangeur 1 thermique, et le deuxième groupe d'espaces 40 intermédiaires multi-fluides permet la circulation d'un deuxième groupe de fluides dans l'échangeur 1 thermique. L'échangeur 1 thermique peut présenter dans la direction E d'empilement une alternance d'espaces 40 intermédiaires multi-fluides du premier groupe et d'espaces 40 intermédiaires multi-fluides du deuxième groupe. Cela permet un échange thermique entre les fluides du premier groupe et les fluides du deuxième groupe.

Selon une possibilité, la pluralité d'ouvertures 12 ou le cas échéant les canaux 14 de distribution peuvent être configurés pour distribuer des fluides de manière alternée dans les compartiments 42 d'un même espace 40 intermédiaire multi-fluides. Ainsi, selon l'exemple des figures 8 et 9, chaque espace 40 intermédiaire multi-fluides peut comprendre un premier groupe de compartiments 42a destinés à la circulation d'un même fluide (flèche 54) parmi les fluides circulant à travers cet espace 40 intermédiaire multi-fluides, un deuxième groupe de compartiments 42b destinés à la circulation d'un même autre fluide (flèche 56) parmi les fluides circulant à travers cet espace 40 intermédiaire multi-fluides, et les compartiments 42a du premier groupe sont disposés de manière alternée avec les compartiments 42b du deuxième groupe. En l'occurrence, les ouvertures 18 d'entrée des compartiments 42a du premier groupe, respectivement du deuxième groupe, débouchent dans un même canal 14 de distribution, de même que leurs ouvertures 20 de sortie.

Bien que non représenté, la pluralité d'ouvertures 12 ou le cas échéant les canaux 14 de distribution peuvent être configurés pour distribuer des fluides dans les compartiments 42 en quinconce de deux espaces 40 intermédiaires multi-fluides adjacents. Pour reprendre l'exemple de la figure 9, les compartiments 42a du premier groupe pourraient être agencés au-dessus ou en-dessous d'un compartiment 42b du deuxième groupe. Cet agencement en quinconce améliore le rendement de l'échangeur thermique.

L'invention a aussi pour objet un véhicule, notamment un véhicule automobile, comprenant un échangeur 1 thermique ayant tout ou partie des caractéristiques décrites précédemment.

Bien entendu, l'invention n'est nullement limitée au mode de réalisation décrit ci-dessus, ce mode de réalisation n'ayant été donné qu'à titre d'exemple. Des modifications sont possibles, notamment du point de vue de la constitution des divers dispositifs ou par la substitution d'équivalents techniques, sans sortir pour autant du domaine de protection de l'invention.

## Revendications

1. Echangeur (1) thermique, en matière plastique, comprenant une pile de plaques (2), dont les plaques (2) adjacentes sont espacées les unes des autres de sorte que la pile de plaques (2) présente un ensemble d'espaces (4) intermédiaires permettant une circulation de fluide entre ces plaques (2), l'ensemble d'espaces (4) intermédiaires comprend une pluralité d'espaces (40) intermédiaires multi-fluides, chaque espace (40) intermédiaire multi-fluides étant destiné à la circulation de plusieurs fluides entre deux plaques (2) adjacentes de la pile de plaques (2), lesdits espaces (40) intermédiaires multi-fluides étant chacun cloisonné en plusieurs compartiments (42) séparés de manière étanche les uns des autres, chaque compartiment (42) étant configuré pour la circulation d'un fluide parmi la pluralité de fluides, et chaque compartiment (42) étant en communication fluidique avec un des compartiments (42) d'un espace (40) intermédiaire multi-fluides distinct parmi la pluralité d'espaces (40) intermédiaires multi-fluides, **caractérisé en ce que** chaque espace (40) intermédiaire multi-fluides comprend une paroi (44) interne s'étendant à travers celui-ci de manière à séparer de façon étanche au moins deux compartiments (42) adjacents de cet espace (40) intermédiaire multi-fluides, et la paroi (44) interne est configurée pour permettre un échange thermique entre les fluides circulant dans ces au moins deux compartiments (42) adjacents.

2. Echangeur (1) thermique selon la revendication 1, dans lequel la paroi (44) interne s'étend au moins en partie selon une trajectoire sinueuse.

3. Echangeur (1) thermique selon la revendication 1 ou 2, dans lequel la paroi (44) interne est venue de moulage avec au moins l'une des deux plaques (2) adjacentes entre lesquelles cette paroi (44) interne s'étend.

4. Echangeur (1) thermique selon l'une des revendications 1 à 3, dans lequel la paroi (44) interne est liée à au moins l'une des deux plaques (2) adjacentes par des moyens de liaison étanches et thermiquement conducteurs.

5. Echangeur (1) thermique selon l'une des revendications 1 à 4, dans lequel la paroi (44) interne a une épaisseur inférieure à celle des plaques (2) entre lesquelles cette paroi (44) interne s'étend.

6. Echangeur (1) thermique selon l'une des revendications 1 à 5, dans lequel les parois (44) internes de deux espaces (40) intermédiaires multi-fluides consécutifs s'étendent en décalage l'une de l'autre.

7. Echangeur (1) thermique selon l'une des revendications 1 à 6, dans lequel plusieurs plaques (2) de la pile de plaques (2) ont une épaisseur et/ou une densité différente.

8. Echangeur (1) thermique selon l'une des revendications 1 à 7, dans lequel les compartiments (42) de chaque espace (40) intermédiaire multi-fluides sont au moins en partie délimités par des faces (22) en regard des deux plaques (2) adjacentes délimitant cet espace (40) intermédiaire multi-fluides.

9. Echangeur (1) thermique selon l'une des revendications 1 à 8, dans lequel au moins un des compartiments (42) comprend une pluralité d'éléments (48) destinés à entraver l'écoulement de fluide dans ce compartiment (42), et les éléments (48) sont thermiquement conducteurs.

10. Véhicule comprenant un échangeur thermique selon l'une des revendications 1 à 9.

## Patentansprüche

1. Wärmetauscher (1) aus Kunststoffmaterial, umfassend einen Stapel an Platten (2), dessen benachbarte Platten (2) derart voneinander beabstandet sind, dass der Stapel an Platten (2) eine Reihe von Zwischenräumen (4) aufweist, die eine Fluidzirkulation zwischen diesen Platten (2) erlaubt,
wobei die Reihe von Zwischenräumen (4) eine Vielzahl von Mehrfluid-Zwischenräumen (40) umfasst, wobei jeder Mehrfluid-Zwischenraum (40) zur Zirkulation mehrerer Fluide zwischen zwei benachbarten Platten (2) des Stapels an Platten (2) bestimmt ist, wobei die Mehrfluid-Zwischenräume (40) jeweils in mehrere Fächer (42) unterteilt sind, die in dichter Form voneinander getrennt sind, wobei jedes Fach (42) für die Zirkulation eines Fluids aus der Vielzahl von Fluiden konfiguriert sind, und jedes Fach (42) in Fluidverbindung mit einem der Fächer (42) eines separaten Mehrfluid-Zwischenraums (40) aus der Vielzahl von Mehrfluid-Zwischenräumen (40) ist, **dadurch gekennzeichnet, dass** jeder Mehrfluid-Zwischenraum (40) eine Innenwand (44) umfasst, die sich quer durch diesen erstreckt, um mindestens zwei benachbarte Fächer (42) dieses Mehrfluid-Zwischenraums (40) in dichter Form zu trennen, und die Innenwand (44) konfiguriert ist, um einen Wärmetausch zwischen den Fluiden zu erlauben, die in diesen mindestens zwei benachbarten Fächern (42) zirkulieren.

2. Wärmetauscher (1) nach Anspruch 1, wobei sich die Innenwand (44) mindestens teilweise in einer wellenförmigen Bahn erstreckt.

3. Wärmetauscher (1) nach Anspruch 1 oder 2, wobei die Innenwand (44) an mindestens eine der zwei benachbarten Platten (2) angeformt ist, zwischen denen sich diese Innenwand (44) erstreckt.

4. Wärmetauscher (1) nach einem der Ansprüche 1 bis 3, wobei die Innenwand (44) durch dichte und wärmeleitende Verbindungsmittel mit mindestens einer der zwei benachbarten Platten (2) verbunden ist.

5. Wärmetauscher (1) nach einem der Ansprüche 1 bis 4, wobei die Innenwand (44) eine Stärke aufweist, die geringer ist, als jene der Platten (2) zwischen denen sich diese Innenwand (44) erstreckt.

6. Wärmetauscher (1) nach einem der Ansprüche 1 bis 5, wobei sich die Innenwände (44) von zwei aufeinander folgenden Mehrfluid-Zwischenräumen (40) versetzt zueinander erstrecken.

7. Wärmetauscher (1) nach einem der Ansprüche 1 bis 6, wobei mehrere Platten (2) des Stapels an Platten (2) eine unterschiedliche Stärke und/oder eine Dichte aufweisen.

8. Wärmetauscher (1) nach einem der Ansprüche 1 bis 7, wobei die Fächer (42) jedes Mehrfluid-Zwischenraums (40) mindestens teilweise durch Seiten (22) gegenüber den zwei benachbarten Platten (2) eingegrenzt sind, die diesen Mehrfluid-Zwischenraum (40) eingrenzen.

9. Wärmetauscher (1) nach einem der Ansprüche 1 bis 8, wobei mindestens eines der Fächer (42) eine Vielzahl von Elementen (48) umfasst, die dazu bestimmt sind, die Strömung von Fluid in diesem Fach (42) zu hemmen, und die Elemente (48) wärmeleitend sind.

10. Fahrzeug, umfassend einen Wärmetauscher nach einem der Ansprüche 1 bis 9.

## Claims

1. A heat exchanger (1), made of a plastic material, comprising a stack of plates (2), whose adjacent plates (2) are spaced apart from each other so that the stack of plates (2) has a set of intermediate spaces (4) enabling a circulation of fluid between these plates (2),
the set of intermediate spaces (4) comprises a plurality of multi-fluid intermediate spaces (40), each multi-fluid intermediate space (40) being intended for the circulation of several fluids between two adjacent plates (2) of the stack of plates (2), each of said multi-fluid intermediate spaces (40) being partitioned into several compartments (42) sealingly separated from each other, each compartment (42) being configured for the circulation of a fluid among the plurality of fluids, and each compartment (42) being in fluid communication with one of the compartments (42) of a distinct multi-fluid intermediate space (40) among the plurality of multi-fluid intermediate spaces (40)
**characterized in that** each multi-fluid intermediate space (40) comprises an inner wall (44) extending therethrough so as to sealingly separate at least two adjacent compartments (42) of this multi-fluid intermediate space (40), and the inner wall (44) is configured to enable a heat exchange between the fluids circulating in these at least two adjacent compartments (42).

2. The heat exchanger (1) according to claim 1, wherein the inner wall (44) extends at least partially according to a sinuous trajectory.

3. The heat exchanger (1) according to claim 1 or 2, wherein the inner wall (44) is integrally molded with at least one of the two adjacent plates (2) between which this inner wall (44) extends.

4. The heat exchanger (1) according to any of claims 1 to 3, wherein the inner wall (44) is connected to at least one of the two adjacent plates (2) by sealed and thermally conductive connecting means.

5. The heat exchanger (1) according to any of claims 1 to 4, wherein the inner wall (44) has a thickness smaller than that of the plates (2) between which this inner wall (44) extends.

6. The heat exchanger (1) according to any of claims 1 to 5, wherein the inner walls (44) of two consecutive multi-fluid intermediate spaces (40) extend offset from each other.

7. The heat exchanger (1) according to any of claims 1 to 6, wherein several plates (2) of the stack of plates (2) have a different thickness and/or density.

8. The heat exchanger (1) according to any of claims 1 to 7, wherein the compartments (42) of each multi-fluid intermediate space (40) are at least partially delimited by faces (22) opposite the two adjacent plates (2) delimiting this multi-fluid intermediate space (40).

9. The heat exchanger (1) according to any of claims 1 to 8, wherein at least one of the compartments (42) comprises a plurality of elements (48) intended to impede the flow of fluid into this compartment (42), and the elements (48) are thermally conductive.

10. A vehicle comprising a heat exchanger according to any of claims 1 to 9.
